# EUROPÄISCHE PATENTSCHRIFT

(11) **EP 2 513 530 B1**
(45) Veröffentlichungstag und Bekanntmachung des Hinweises auf die Patenterteilung: **13.11.2013**
(21) Anmeldenummer: 10808968.1
(22) Anmeldetag: 02.12.2010
(51) Int. Cl.: F16J 15/34

(54) **GLEITRINGDICHTUNG**
SLIDE RING SEAL
JOINT D'ÉTANCHÉITÉ À BAGUE GLISSANTE

(30) Priorität: 15.12.2009 DE 102009058315
(43) Veröffentlichungstag der Anmeldung: 24.10.2012
(73) Patentinhaber: Federal-Mogul Burscheid GmbH, 51399 Burscheid (DE)
(72) Erfinder: HOPPE, Steffen, 51491 Overath (DE); DENGLER, Andreas, 86316 Friedberg (DE)
(74) Vertreter: Döpp, Ludger
(86) Internationale Anmeldenummer: PCT/DE2010/001411
(87) Internationale Veröffentlichungsnummer: WO 2011/072640

(56) Entgegenhaltungen:
- EP-A1- 0 779 457
- DE-A1- 1 928 675
- DE-A1- 3 141 512
- US-A- 3 905 606
- US-A- 5 544 896

## Beschreibung

Die Erfindung betrifft eine Gleitringdichtung gemäß gattungsbildendem Teil des ersten Patentanspruchs.

Insbesondere als Laufwerkdichtungen ausgebildete Gleitringdichtungen werden vielfach zur Abdichtung von Laufwerken sowie An-/Abtrieben für geringe Umfangsgeschwindigkeiten bis zu ca. 10 m/s, unter Gewährleistung einer statischen Dichtheit zur Luftseite hin, eingesetzt. Die Gleit- und/oder Gegenringe von Laufwerkdichtungen werden aus harten und verschleißbeständigen metallischen Werkstoffen (Stellite, Stahl, Duronit und ähnliche) erzeugt.

Die DE 101 55 653 C2 offenbart eine Gleitringdichtung, insbesondere eine Laufwerkdichtung, umfassend einen winkelförmigen Gleit- und Gegenring, die mit ihren radialen Dichtschenkeln eine Dichtfläche bilden und aus elastomerem Werkstoff bestehenden Dichtkörpern, die zwischen dem die Gleitringdichtung aufnehmenden Gehäuse und der radial äußeren Oberfläche der axialen Schenkel des Gleit- und Gegenringes angeordnet sind.

In der DE 10 2004 036 974 wird eine Gleitringdichtung, insbesondere eine Laufwerkdichtung, beschrieben, beinhaltend einen Gegen- und einen Gleitring mit je einer Spannfläche zur Aufnahme eines elastomeren Federkörpers, ein dem Gegen- und Gleitring zugeordnetes Gehäuse mit einer Gegenspannfläche für den Federkörper, wobei die Gehäuse ineinander liegend zu einer Einheit verbunden sind und im Bereich des Gegen- und des Gleitringes eine Verdrehsicherung vorgesehen ist.

Durch die EP 0 779 457 A1 ist eine gattungsgemäße Gleitringdichtung bekannt geworden, bestehend aus einem Gleit- und/oder Gegenring aus metallischem Werkstoff mit einer zur Aufnahme eines elastischen Rollkörpers bestimmten kegeligen Umfangsfläche. Die dem Medium zugekehrte Mantelfläche des Gleit- und/oder Gegenrings ist mit einem eingebrannten Pulverlack beschichtet.

Der DE 31 41 512 A1 ist ein Gleit- und/oder Gegenring einer Gleitringdichtung zu entnehmen. Bei dieser Gleitringdichtung ist mediumseitig im Bereich des Gleit- und/oder Gegenrings eine Sekundärdichtstelle vorgesehen, die aus einem O-Ring und gegebenenfalls einem Stützring gebildet sein kann.

In der DE 1 928 675 wird eine berührungslose mit Packungen versehe mechanische Dichtung beschrieben. Die Dichtfläche eines der Ringe ist durch einen Läppvorgang leicht konvex geformt, um dadurch den notwendigen keilförmigen Raum an den äußeren radialen Bereichen des Dichtrings zu schaffen, wodurch die Trennung der Flächen während des Betriebs eingeleitet und beibehalten wird.

In analoger Weise wird auch in der US 3,905,606 eine berührungslos wirkende Dichtung vorgestellt, bei welcher der mit einem Gehäuse feststehende axial verschiebliche Gleitring ein konvex gekrümmtes Profil besitzt, dessen Krümmungsradien sich von dem Innendurchmesser zum Außendurchmesser des Rings allmählich verkleinern.

Die US 5,544,896 betrifft eine Gleitringdichtung, bei welcher die Dichtflächen des Gleit- und Gegenringes vollflächig aufeinander liegen und zumindest einer der Dichtringe aus einem Verbundwerkstoff gebildet ist.

Der Erfindung liegt die Aufgabe zugrunde, den technischen Einsatzbereich von Gleitringdichtungen, insbesondere Laufwerkdichtungen, dahingehend zu erweitern, dass selbige auch für Umfangsgeschwindigkeiten oberhalb von 10 m/s, insbesondere für Umfangsgeschwindigkeiten bis 30 m/s, einsetzbar und in der Lage sind, heute gängige Radialwellendichtungen mit deutlich geringerer Lebensdauer zu ersetzen.

Diese Aufgabe wird dadurch gelöst, dass der Gleitring eine, unter einem Winkel zu der radial verlaufenden Gleitfläche verlaufende, Trapezfläche aufweist und die konvex ausgebildete Kontur im trapeznahen Bereich der Gleitfläche vorgesehen ist.

Vorteilhafte Weiterbildungen des Erfindungsgegenstandes sind den Unteransprüchen zu entnehmen.

In seiner einfachsten Ausgestaltungsform beinhaltet die Gleitringdichtung lediglich einen Gleitring in Wirkverbindung mit einem elastomeren Federelement, bei welchem die Gleitfläche mit der erfindungsgemäßen Kontur versehen ist.

Vom Prinzip her werden zunächst einmal alle geometrischen kurvenförmig ausgebildeten Konturen angesprochen.

Von besonderem Vorteil ist, wenn die Krümmung nach Art eines Radius ausgebildet ist.

Die erfindungsgemäße Gleitringdichtung ist im Einsatz als Laufwerkdichtung für deutlich höhere Umfangsgeschwindigkeiten bis 30 m/s einsetzbar und aus diesem Grund in der Lage, Radialwellendichtungen mit deutlich geringerer Lebensdauer zu ersetzen.

Die jeweilige Kontur wird bevorzugt durch einen Poliervorgang oder eine Drehbearbeitung der Gleitfläche erzeugt.

Je nach Einsatzfall kann es sinnvoll sein, die Gleitfläche mit einer reibungsarmen Beschichtung zu versehen. Als Beschichtungen bieten sich DLC-, PVD- oder Chromschichten an. Der Fachmann wird, je nach Einsatzfall, die geeignete Art der Beschichtung auswählen.

Einem weiteren Gedanken der Erfindung gemäß, ist der Gleitring im Querschnitt etwa winkelförmig ausgebildet und weist eine radial verlaufende Gleitfläche sowie eine, unter einem Winkel dazu verlaufende Trapezfläche auf, wobei die Gleitfläche mit der konvex ausgebildeten Kontur, und zwar im trapeznahen Bereich der Gleichfläche versehen ist.

Eine Laufwerkdichtung besteht vielfach aus einem Gleit- und einem Gegenring, wobei die Gleitflächen einander zugewandt sind. Einem weiteren Gedanken der Erfindung gemäß ist sowohl die Gleitfläche des Gleit- als auch des Gegenrings mit der konvex ausgebildeten Kontur versehen, wobei es von besonderem Vorteil ist, dass die Gleitflächenkonturen im Wesentlichen gleichartig ausgebildet sind.

Durch die erfindungsgemäße Geometrie der Lauffläche wird die lokale Flächenpressung deutlich reduziert und darüber hinaus zeigen sich auch Vorteile bei möglichen Versatzproblemen zwischen der Gleitfläche des Gleitrings und der Gegenlauffläche, insbesondere der Gegenlauffläche des Gegenrings.

Der Erfindungsgegenstand ist anhand eines Ausführungsbeispiels in der Zeichnung dargestellt und wird wie folgt beschrieben. Es zeigen:
- Figur 1: Prinzipskizze einer aus Gleit- und Gegenring bestehenden Laufwerkdichtung;
- Figur 2: Teildarstellung des Gleitrings;
- Figur 3: Teildarstellung des Gleit- und Gegenrings;
- Figur 4: Vergrößerte Darstellung des Gleitbereichs zwischen Gleit- und Gegenring.

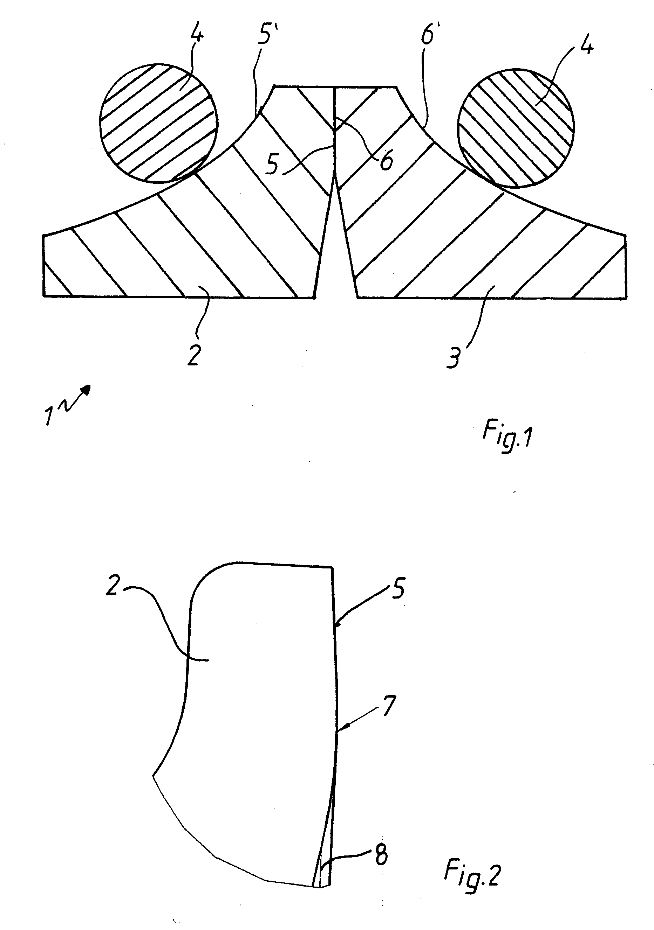

Figur 1 zeigt eine als Laufwerkdichtung 1 ausgebildete Gleitringdichtung, bestehend aus einem Gleitring 2, einem Gegenring 3 sowie jeweils einem elastomeren Federelement 4. Der Gleit- 2 und der Gegenring 3 sind im Querschnitt etwa winkelförmig ausgebildet und beinhalten jeweils eine Gleitfläche 5,6 sowie einen Aufnahmebereich 5',6' für die Federelemente 4.

Figur 2 zeigt eine Teildarstellung des Gleitrings 2. Erkennbar ist die Gleitfläche 5. In demjenigen Bereich der Gleitfläche 5, der mit einem Pfeil gekennzeichnet ist, ist die Gleitfläche 5 mit einer konvex ausgebildeten Kontur 7 versehen. Die Gleitfläche 5 verläuft in diesem Beispiel in radialer Richtung und läuft außerhalb der Gleitfläche 5 in einer Trapezfläche 8 aus.

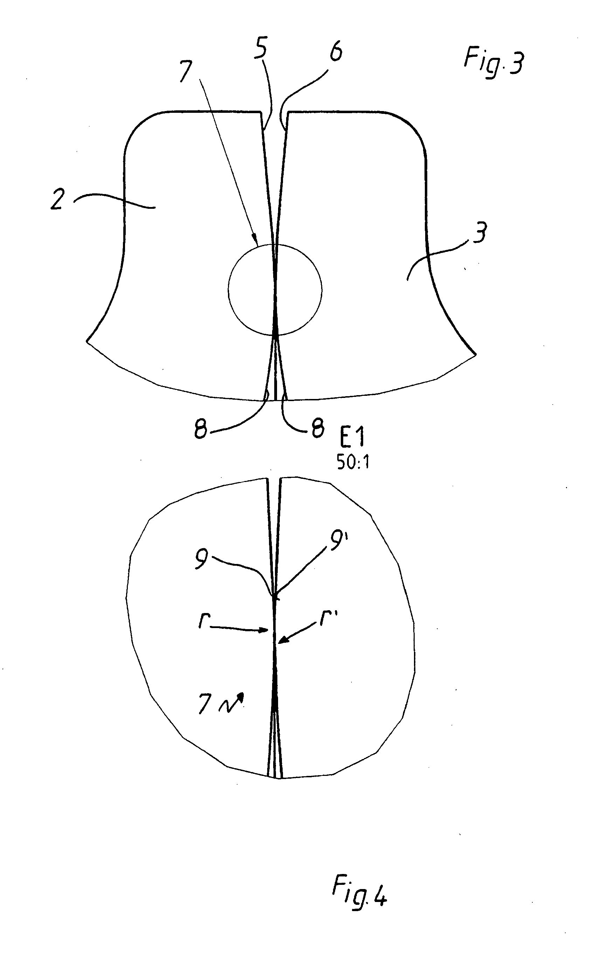

Figur 3 zeigt in vergrößerter Form den Gleitring 2, den Gegenring 3, die beiden Gleitflächen 5,6 sowie die Trapezflächen 8. Der mit der konvex ausgebildeten Kontur 7 versehene Gleitflächenabschnitt ist mit einem Kreis umgeben.

Figur 4 zeigt in 50-facher Vergrößerung den Bereich 7 gemäß Figur 3. Der Bereich 7 umfasst in diesem Beispiel jeweils einen Radius r,r', die in diesem Beispiel gleich ausgebildet sein sollen. Lediglich angedeutet ist, dass die Gleitflächen 5,6 mit einer Beschichtung, beispielsweise einer Chromschicht 9,9' versehen sind.

## Patentansprüche

1. Gleitringdichtung, insbesondere Laufwerkdichtung (1), zumindest beinhaltend einen Gleitring (2), der in Wirkverbindung mit einer Gegenlauffläche, insbesondere einem Gegenring (3), steht, wobei der Gleitring (2) eine Gleitfläche (5) und einen Aufnahmebereich (5',6') für ein elastomeres Federelement (4) aufweist, wobei zumindest die Gleitfläche (5) des Gleitrings (1) mit einer konvex ausgebildeten Kontur versehen ist und der Gleitring (1) im Querschnitt etwa winkelförmig ausgebildet ist und eine radial verlaufende Gleitfläche (5) aufweist, **dadurch gekennzeichnet, dass** der Gleitring (1) eine, unter einem Winkel zu der radial verlaufenden Gleitfläche (5) verlaufende, Trapezfläche (8) aufweist und die konvex ausgebildete Kontur (7) im trapeznahen Bereich der Gleitfläche (5) vorgesehen ist.

2. Gleitringdichtung nach Anspruch 1, **dadurch gekennzeichnet, dass** die Kontur (7) nach Art einer Kurve mit vorgebbarer Krümmung ausgebildet ist.

3. Gleitringdichtung nach Anspruch 1 oder 2, **dadurch gekennzeichnet, dass** die Krümmung (7) nach Art eines Radius ausgebildet ist.

4. Gleitringdichtung nach einem der Ansprüche 1 bis 3, **dadurch gekennzeichnet, dass** die Kontur (7) durch einen Poliervorgang oder eine Drehbearbeitung der Gleitfläche (5) erzeugt ist.

5. Gleitringdichtung nach einem der Ansprüche 1 bis 4, **dadurch gekennzeichnet, dass** die Gleitfläche (5) mit einer reibungsarmen Beschichtung (9,9') versehen ist.

6. Gleitringdichtung nach einem der Ansprüche 1 bis 5, **dadurch gekennzeichnet, dass** die Beschichtung (9,9') durch eine DLC-, eine PVD- oder eine Chromschicht gebildet ist.

7. Gleitringdichtung nach einem der Ansprüche 1 bis 6, beinhaltend einen Gleit- (2) und einen Gegenring (3) mit einander zugewandten Gleitflächen (5,6), **dadurch gekennzeichnet, dass** die Gleitfläche (5,6) sowohl des Gleit- (2) als auch des Gegenrings (3) mit einer konvex ausgebildeten Kontur (7) versehen ist.

8. Gleitringdichtung nach Anspruch 7, **dadurch gekennzeichnet, dass** die Gleitflächenkonturen (7) im Wesentlichen gleich ausgebildet sind.

## Claims

1. A slide ring seal, in particular a running gear seal (1), at least comprising one slide ring (2) which is actively connected to a counter surface, in particular a counter ring (3), wherein the slide ring (2) comprises a sliding surface (5) and a receiving portion (5', 6') for an elastomeric spring element (4), wherein at least the sliding surface (5) of the slide ring (2) is provided with a convex contour and the slide ring (2) has got a cross section which is approximately angular and comprises a radially extending sliding surface (5), **characterized in that** the slide ring (2) comprises a trapezoid surface (8) which extends at an angle with respect to the radially extending sliding surface (5) and the convex contour (7) is provided in the region of the sliding surface (5) that is close to the trapezoid surface.

2. A slide ring seal according to claim 1, **characterized in that** the contour (7) is designed like a curve having a pre-determinable curvature.

3. A slide ring seal according to claim 1 or 2, **characterized in that** the curvature (7) is designed like a radius.

4. A slide ring seal according to one of the claims 1 through 3, **characterized in that** the contour (7) is generated by means of a polishing process or a turning treatment of the sliding surface (5).

5. A slide ring seal according to one of the claims 1 through 4, **characterized in that** the sliding surface (5) is provided with a coating without friction (9, 9').

6. A slide ring seal according to one of the claims 1 through 5, **characterized in that** the coating (9, 9') is formed by a DLC layer, a PVD layer or a chrome layer.

7. A slide ring seal according to one of the claims 1 through 6, comprising a sliding ring (2) and a counter ring (3) having sliding surfaces (5, 6) which face each other, **characterized in that** the sliding surfaces (5, 6) of both the sliding ring (2) and the counter ring (3) are provided with a convex contour (7).

8. A slide ring seal according to claim 7, **characterized in that** the sliding surface contours (7) are essentially identical.

## Revendications

1. Joint d'étanchéité à bague glissante, notamment joint de mécanisme de roulement (1), au moins comprenant une bague glissante (2) qui est activement reliée à une contre-surface de roulement, notamment à une contre-bague (3), la bague glissante (2) comprenant une surface glissante (5) et une partie de réception (5', 6') destinée à un élément de ressort elastomère (4), dans lequel au moins la surface glissante (5) de la bague glissante (2) est munie d'un contour convexe et la bague glissante (2) a une section transversale qui est approximativement angulaire et comprend une surface glissante (5) qui s'étend radialement, **caractérisé en ce que** la bague glissante (2) comprend une surface trapézoïdale (8) qui s'étend selon un angle par rapport à la surface glissante (5) s'étendant radialement et le contour convexe (7) est prévu dans cette région de la surface glissante (5) qui est voisine de la surface trapézoïdale.

2. Joint d'étanchéité à bague glissante selon la revendication 1, **caractérisé en ce que** le contour (7) est configuré à la manière d'une courbe ayant une courbure pré-déterminable.

3. Joint d'étanchéité à bague glissante selon la revendication 1 ou la revendication 2, **caractérisé en ce que** la courbure (7) est configurée à la manière d'un rayon.

4. Joint d'étanchéité à bague glissante selon l'une des revendications 1 à 3, **caractérisé en ce que** le contour (7) est généré par moyen d'une opération de polissage ou d'un usinage par tournage de la surface glissante (5).

5. Joint d'étanchéité à bague glissante selon l'une des revendications 1 à 4, **caractérisé en ce que** la surface glissante (5) est munie d'un revêtement sans friction (9, 9').

6. Joint d'étanchéité à bague glissante selon l'une des revendications 1 à 5, **caractérisé en ce que** le revêtement (9, 9') est formé par une couche en DLC, une couche en PVD ou une couche en chrome.

7. Joint d'étanchéité à bague glissante selon l'une des revendications 1 à 6, comprenant une bague glissante (2) et une contre-bague (3) ayant des surfaces glissantes (5, 6) qui font face l'une à l'autre, **caractérisé en ce que** les surfaces glissantes (5, 6) de la bague glissante (2) et de la contre-bague (3) sont munies d'un contour convexe (7).

8. Joint d'étanchéité à bague glissante selon la revendication 7, **caractérisé en ce que** les contours des surfaces glissantes (7) sont essentiellement identiques.
